# EUROPEAN PATENT APPLICATION

(11) **EP 2 696 562 A2**
(43) Date of publication of application: **12.02.2014**
(21) Application number: 11768457.1
(22) Date of filing: 13.05.2011
(51) Int. Cl.: H04M 1/725, H04W 88/02

(54) **KEY DISPLAY MANNER UPDATING METHOD AND RADIO HANDSET**

(71) Applicant: Huawei Device Co., Ltd., Longgang District Shenzhen Guangdong 518129 (CN)
(72) Inventor: CHEN, Jiong, Shenzhen Guangdong 518129 (CN); ZHU, Yongsheng, Shenzhen Guangdong 518129 (CN)
(74) Representative: Pfenning, Meinig & Partner GbR
(86) International application number: PCT/CN2011/074049
(87) International publication number: WO 2011/127846

(57) **Abstract**

Embodiments of the present invention relate to a key display updating method and a wireless handheld device. The method includes: counting click times of each key on a virtual keyboard; obtaining a display manner corresponding to the counted click times of each key based on correspondence between click times of keys and display manners; and displaying each key according to the display manner corresponding to the click times of each key. The embodiments of the present invention improve, for a wireless handheld device, the flexibility for displaying keys of a virtual keyboard and the efficiency for obtaining information input through the keys of the virtual keyboard.

## Description

### TECHNICAL FIELD

Embodiments of the present invention relate to communications technologies, and in particular, to a key display manner updating method and a wireless handheld device.

### BACKGROUND

With the development of science and technology, more and more wireless handheld devices, such as mobile phones, digital photo frames, and tablet computers, have become a part of people's daily life. The most common user interaction manner of a wireless handheld device is displaying input information inputted by a user, such as a short message, and displaying matching information, such as contact information, which matches the input information inputted by the user. A wireless handheld device may obtain through a touchscreen the input information that is inputted by the user through keys of a virtual keyboard, and display corresponding information.

However, the wireless handheld device displays keys of the virtual keyboard in a fixed display manner, which reduces the flexibility for displaying the keys, and thereby reducing the efficiency for obtaining key input information.

### SUMMARY

Embodiments of the present invention provide a key display manner updating method and a wireless handheld device, used to improve, for a wireless handheld device, the flexibility for displaying keys of a virtual keyboard and the efficiency for obtaining information input through the keys of the virtual keyboard.

An embodiment of the present invention provides a key display manner updating method, including:
counting click times of each key on a virtual keyboard;
obtaining a display manner corresponding to the counted click times of each key based on correspondence between click times of keys and display manners; and
displaying each key according to the display manner corresponding to the click times of each key.

An embodiment of the present invention further provides a wireless handheld device, including:
a touchscreen, configured to receive a click operation;
a counting unit, configured to count click times of each key of a virtual keyboard on the touchscreen;
an obtaining unit, configured to obtain a display manner corresponding to the click times of each key counted by the counting unit based on correspondence between click times of keys and display manners; and
a display unit, configured to display each key according to the display manner obtained by the obtaining unit and corresponding to the click times of each key.

According to the above technical solution, in the embodiments of the present invention, click times of each key on a virtual keyboard are counted, and then a display manner corresponding to the counted click times of each key is obtained based on correspondence between click times of keys and display manners, so as to display each key according to the display manner corresponding to the click times of each key, which avoids the problem in the prior art that the flexibility for displaying keys is reduced because the wireless handheld device displays the keys of the virtual keyboard in a fixed display manner, thereby improving, for the wireless handheld device, the flexibility for displaying the keys of the virtual keyboard and the efficiency for obtaining information input through the keys of the virtual keyboard.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a key display manner updating method provided by an embodiment of the present invention;
FIG. 2 is a schematic structural diagram of a wireless handheld device provided by another embodiment of the present invention;
FIG. 3 is another schematic structural diagram of a wireless handheld device provided by another embodiment of the present invention;
FIG. 4 is another schematic structural diagram of a wireless handheld device provided by another embodiment of the present invention;
FIG. 5 is another schematic structural diagram of a wireless handheld device provided by another embodiment of the present invention; and
FIG. 6 is another schematic structural diagram of a wireless handheld device provided by another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be noted that, the wireless handheld device involved in the embodiments of the present invention includes but is not limited to a touchscreen mobile phone, a touchscreen personal digital assistant (Personal Digital Assistant, abbreviated as PDA), a touchscreen wireless handheld device, a touchscreen wireless netbook, a touchscreen MP3 player, a touchscreen MP4 player, and so on.

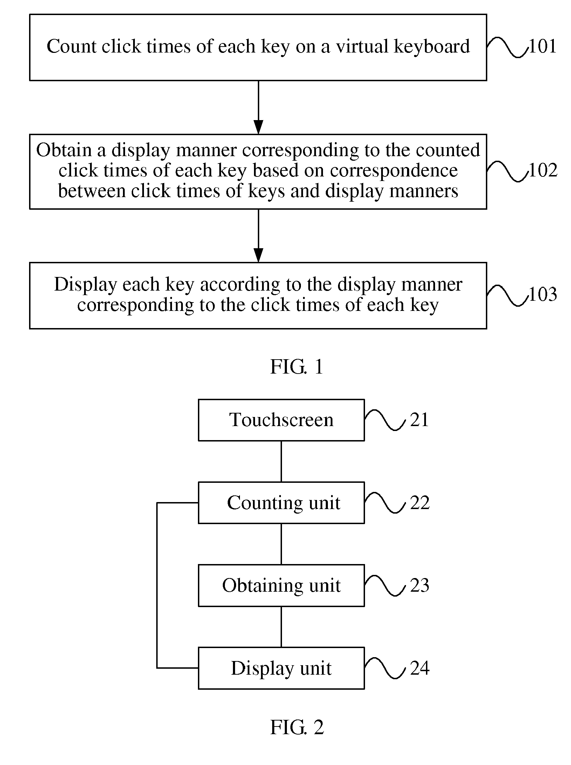

FIG. 1 is a schematic flowchart of a key display manner updating method provided by an embodiment of the present invention. As shown in FIG. 1:
101: Count click times of each key on a virtual keyboard.

Specifically, a counter may be started to collect the click times of each key.

102: Obtain a display manner corresponding to the counted click times of each key based on correspondence between click times of keys and display manners.

The display manner may include at least one of the following:
display in different colors, for example: red, green, light blue, dark blue, and so on;
display in different brightness, for example: 20%, 50%, 80%, 100%, and so on;
display in different transparency, for example: 20%, 50%, 80%, 100%, and so on;
display in different shapes, for example: rectangle, square, ellipse, circle, and so on; and
display in different sizes, for example: 1/2 of a standard size, a standard size, twice of a standard size, triple of a standard size, and so on.

103: Display each key according to the display manner corresponding to the click times of each key.

In this embodiment, the entity for executing steps 101 to 103 may be a wireless handheld device.

Further, before step 102, this embodiment may further include a step of establishing the correspondence between click times of keys and display manners on the wireless handheld device.

Optionally, the correspondence between click times of keys and display manners may be set according to quantity intervals of times. For example, the correspondence may include at least one of the following:
correspondence between click quantity intervals of keys and display colors;
correspondence between click quantity intervals of keys and display brightness;
correspondence between click quantity intervals of keys and display transparency;
correspondence between click quantity intervals of keys and display shapes; and
correspondence between click quantity intervals of keys and display sizes.

Correspondingly, based on the correspondence between click quantity intervals of keys and display colors, the wireless handheld device may obtain a corresponding display color according to a quantity interval to which click times of a key belong; also, based on the correspondence between click quantity intervals of keys and display brightness, the wireless handheld device may obtain corresponding display brightness according to a quantity interval to which click times of a key belong; also, based on the correspondence between click quantity intervals of keys and display transparency, the wireless handheld device may obtain corresponding display transparency according to a quantity interval to which click times of a key belong; also, based on the correspondence between click quantity intervals of keys and display shapes, the wireless handheld device may obtain a corresponding display shape according to a quantity interval to which click times of a key belong; also, based on the correspondence between click quantity intervals of keys and display sizes, the wireless handheld device may obtain a corresponding display size according to a quantity interval to which click times of a key belong.

Optionally, the correspondence between click times of keys and display manners may be set according to specific times. For example, the correspondence may include at least one of the following:
correspondence between click times of keys and display colors;
correspondence between click times of keys and display brightness;
correspondence between click times of keys and display transparency;
correspondence between click times of keys and display shapes; and
correspondence between click times of keys and display sizes.

Correspondingly, based on the correspondence between click times of keys and display colors, the wireless handheld device may obtain a corresponding display color according to click times of a key; also, based on the correspondence between click times of keys and display brightness, the wireless handheld device may obtain corresponding display brightness according to click times of a key; also, based on the correspondence between click times of keys and display transparency, the wireless handheld device may obtain corresponding display transparency according to click times of a key; also, based on the correspondence between click times of keys and display shapes, the wireless handheld device may obtain a corresponding display shape according to click times of a key; also, based on the correspondence between click times of keys and display sizes, the wireless handheld device may obtain a corresponding display size according to click times of a key.

Optionally, the correspondence between click times of keys and display manners may be set according to orders of magnitudes of times. For example, the correspondence may include at least one of the following:
correspondence between orders of magnitudes of click times of keys and display colors;
correspondence between orders of magnitudes of click times of keys and display brightness;
correspondence between orders of magnitudes of click times of keys and display transparency;
correspondence between orders of magnitudes of click times of keys and display shapes; and
correspondence between orders of magnitudes of click times of keys and display sizes.

Correspondingly, based on the correspondence between orders of magnitudes of click times of keys and display colors, the wireless handheld device may obtain a corresponding display color according to an order of magnitude of click times of a key; also, based on the correspondence between orders of magnitudes of click times of keys and display brightness, the wireless handheld device may obtain corresponding display brightness according to an order of magnitude of click times of a key; also, based on the correspondence between orders of magnitudes of click times of keys and display transparency, the wireless handheld device may obtain corresponding display transparency according to an order of magnitude of click times of a key; also, based on the correspondence between orders of magnitudes of click times of keys and display shapes, the wireless handheld device may obtain a corresponding display shape according to an order of magnitude of click times of a key; also, based on the correspondence between orders of magnitudes of click times of keys and display sizes, the wireless handheld device may obtain a corresponding display size according to an order of magnitude of click times of a key.

The correspondence between click quantity intervals and display manners is taken as an example for detailed description. The correspondence between click quantity intervals and display manners may be as shown in Table 1.

**Table 1 Correspondence between click quantity intervals and display manners**

| **Click quantity interval** | **Color** |
|---|---|
| More than 200 times | Dark blue |
| 150 to 200 times | Light blue |
| 100 to 150 times | Green |
| Less than 100 times | Red |

For example, click times of each key on the virtual keyboard are obtained first; then, based on the correspondence in Table 1, the keys are displayed in different colors (red, green, light blue, and dark blue), thereby improving, for the wireless handheld device, the flexibility for displaying the keys of the virtual keyboard. The correspondence in Table 1 is established according to a user's habit of using the virtual keyboard (namely, click times of keys); therefore, with the keys of the virtual keyboard displayed in different colors, when inputting information using the virtual keyboard, the user is capable of looking for keys mostly in display colors corresponding to high click times, thereby saving time in looking for keys and improving, for the wireless handheld device, the efficiency for obtaining information input through the keys of the virtual keyboard.

In this embodiment, click times of each key on a virtual keyboard are counted, and then a display manner corresponding to the counted click times of each key is obtained based on correspondence between click times of keys and display manners, so as to display each key according to the display manner corresponding to the click times of each key, which avoids the problem in the prior art that the flexibility for displaying keys is reduced because the wireless handheld device displays the keys of the virtual keyboard in a fixed display manner, thereby improving, for the wireless handheld device, the flexibility for displaying the keys of the virtual keyboard and the efficiency for obtaining key input information on the virtual keyboard.

It should be noted that, in order to describe the forgoing method embodiments in a simple way, the embodiments are expressed as a series of action combinations; however, a person skilled in the art should know that the present invention is not limited to the described action sequence because on the basis of the present invention, some steps may be performed in other sequences or performed at the same time. Secondly, a person of ordinary skill in the art should also know that the embodiments described in the specification are exemplary embodiments, and the involved actions and modules are not indispensable parts of the present invention.

In the foregoing embodiments, each embodiment is described with a different emphasis; for the part not elaborated in an embodiment, reference may be made to related description in other embodiments.

FIG. 2 is a schematic structural diagram of a wireless handheld device provided by another embodiment of the present invention. As shown in FIG. 2, the wireless handheld device of this embodiment may include a touchscreen 21, a counting unit 22, an obtaining unit 23, and a display unit 24. The touchscreen 21 is configured to receive a click operation; the counting unit 22 is configured to count click times of each key of a virtual keyboard on the touchscreen; the obtaining unit 23 is configured to obtain a display manner corresponding to the click times of each key counted by the counting unit 22 based on correspondence between click times of keys and display manners; and the display unit 24 is configured to display each key according to the display manner obtained by the obtaining unit 23 and corresponding to the click times of each key.

The method in the embodiment corresponding to FIG. 1 may be implemented by the wireless handheld device provided in this embodiment.

The display manner may include at least one of the following:
display in different colors, for example: red, green, light blue, dark blue, and so on;
display in different brightness, for example: 20%, 50%, 80%, 100%, and so on;
display in different transparency, for example: 20%, 50%, 80%, 100%, and so on;
display in different shapes, for example: rectangle, square, ellipse, circle, and so on; and
display in different sizes, for example: 1/2 of a standard size, a standard size, twice of a standard size, triple of a standard size, and so on.

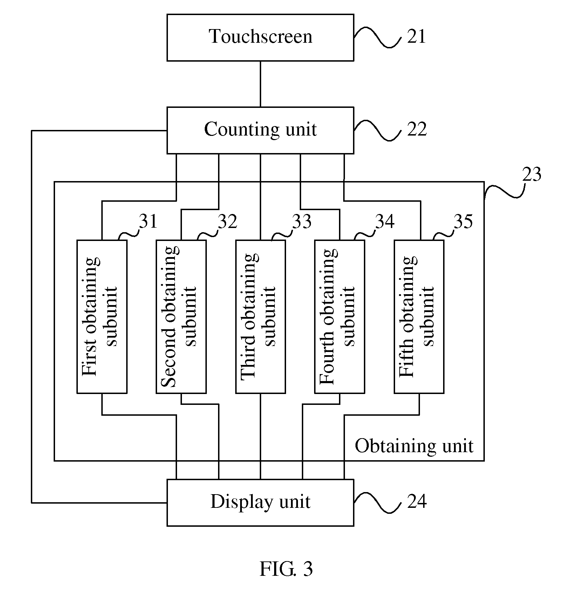

Optionally, as shown in FIG. 3, the obtaining unit 23 in this embodiment may include at least one of the following units:
a first obtaining subunit 31, configured to obtain a corresponding display color according to a quantity interval to which click times of a key belong;
a second obtaining subunit 32, configured to obtain corresponding display brightness according to a quantity interval to which click times of a key belong;
a third obtaining subunit 33, configured to obtain corresponding display transparency according to a quantity interval to which click times of a key belong;
a fourth obtaining subunit 34, configured to obtain a corresponding display shape according to a quantity interval to which click times of a key belong; and
a fifth obtaining subunit 35, configured to obtain a corresponding display size according to a quantity interval to which click times of a key belong.

It should be noted that FIG. 3 only shows a situation where the first obtaining subunit, the second obtaining subunit, the third obtaining subunit, the fourth obtaining subunit, and the fifth obtaining subunit are included at the same time, and in an optional embodiment, any one, two, three, or four of the above subunits may be included.

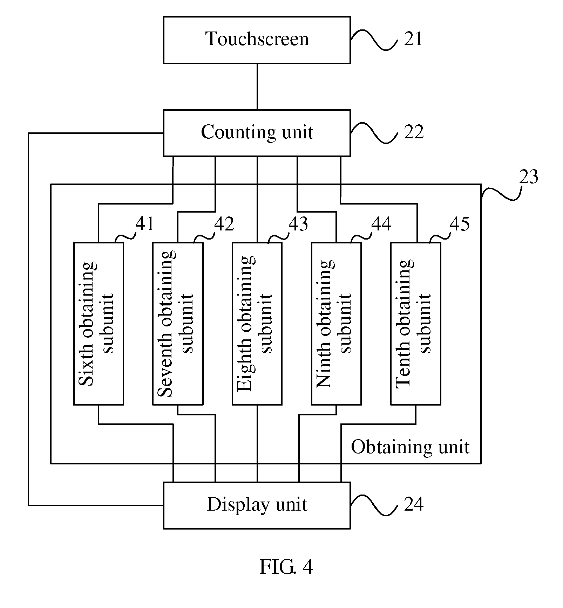

Optionally, as shown in FIG. 4, the obtaining unit 23 in this embodiment may further include at least one of the following units:
a sixth obtaining subunit 41, configured to obtain a corresponding display color according to click times of a key;
a seventh obtaining subunit 42, configured to obtain corresponding display brightness according to click times of a key;
an eighth obtaining subunit 43, configured to obtain corresponding display transparency according to click times of a key;
a ninth obtaining subunit 44, configured to obtain a corresponding display shape according to click times of a key; and
a tenth obtaining subunit 45, configured to obtain a corresponding display size according to click times of a key.

It should be noted that FIG. 4 only shows a situation where the sixth obtaining subunit, the seventh obtaining subunit, the eighth obtaining subunit, the ninth obtaining subunit, and the tenth obtaining subunit are included at the same time, and in an optional embodiment, any one, two, three, or four of the above subunits may be included.

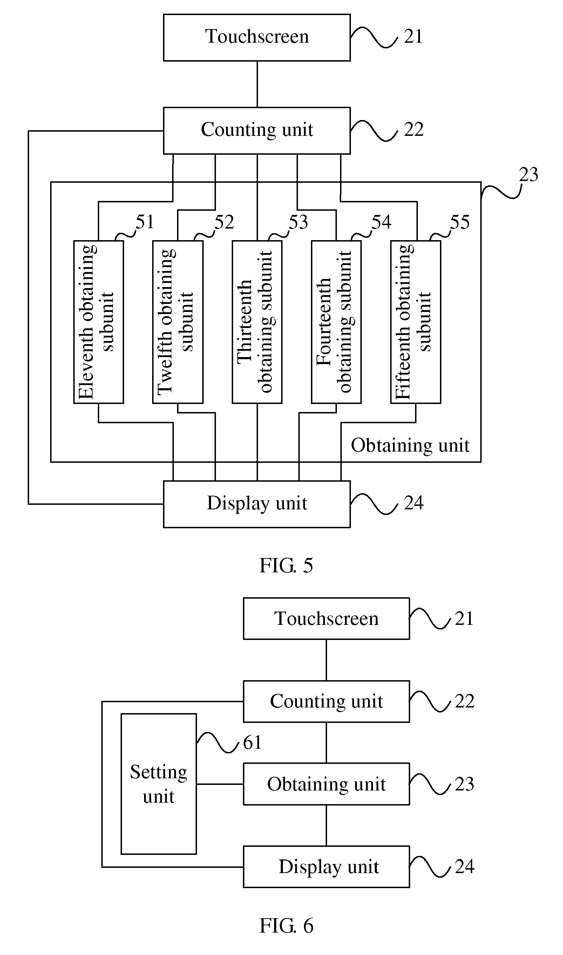

Optionally, as shown in FIG. 5, the obtaining unit 23 in this embodiment may further include at least one of the following units:
an eleventh obtaining subunit 51, configured to obtain a corresponding display color according to an order of magnitude of click times of a key;
a twelfth obtaining subunit 52, configured to obtain corresponding display brightness according to an order of magnitude of click times of a key;
a thirteenth obtaining subunit 53, configured to obtain corresponding display transparency according to an order of magnitude of click times of a key;
a fourteenth obtaining subunit 54, configured to obtain a corresponding display shape according to an order of magnitude of click times of a key; and
a fifteenth obtaining subunit 55, configured to obtain a corresponding display size according to an order of magnitude of click times of a key.

It should be noted that FIG. 5 only shows a situation where the eleventh obtaining subunit, the twelfth obtaining subunit, the thirteenth obtaining subunit, the fourteenth obtaining subunit, and the fifteenth obtaining subunit are included at the same time, and in an optional embodiment, any one, two, three, or four of the above subunits may be included.

Further, as shown in FIG. 6, the wireless handheld device of this embodiment may further include a setting unit 61, configured to set the correspondence between click times of keys and display manners, so that the obtaining unit 23 obtains a display manner corresponding to the click times of each key counted by the counting unit 22 based on the correspondence.

In this embodiment, the counting unit of the wireless handheld device counts click times of each key on a virtual keyboard, and then the obtaining unit obtains a display manner corresponding to the click times of each key counted by the counting unit based on correspondence between click times of keys and display manners, so that the display unit is capable of displaying each key according to the display manner obtained by the obtaining unit and corresponding to the click times of each key, which avoids the problem in the prior art that the flexibility for displaying keys is reduced because the wireless handheld device displays the keys of the virtual keyboard in a fixed display manner, thereby improving, for the wireless handheld device, the flexibility for displaying the keys of the virtual keyboard and the efficiency for obtaining information input through the keys of the virtual keyboard.

It may be clearly understood by a person skilled in the art that, for the purpose of convenient and brief description, a detailed working process of the foregoing system, apparatus, and unit may refer to the corresponding process in the foregoing method embodiments, and the details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit are implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that he may still make modifications to the technical solutions described in the foregoing embodiments, or make equivalent replacements to some technical features thereof, without departing from the spirit and scope of the technical solutions of the embodiments of the present invention.

## Claims

1. A key display manner updating method, comprising:
counting click times of each key on a virtual keyboard;
obtaining a display manner corresponding to the counted click times of each key based on correspondence between click times of keys and display manners; and
displaying each key according to the display manner corresponding to the click times of each key.

2. The method according to claim 1, wherein the obtaining a display manner corresponding to the counted click times of each key comprises:
obtaining a corresponding display color according to a quantity interval to which click times of a key belong; and/or
obtaining corresponding display brightness according to a quantity interval to which click times of a key belong; and/or
obtaining corresponding display transparency according to a quantity interval to which click times of a key belong; and/or
obtaining a corresponding display shape according to a quantity interval to which click times of a key belong; and/or
obtaining a corresponding display size according to a quantity interval to which click times of a key belong; and/or

3. The method according to claim 1, wherein the obtaining a display manner corresponding to the counted click times of each key comprises:
obtaining a corresponding display color according to click times of a key; and/or
obtaining corresponding display brightness according to click times of a key; and/or
obtaining corresponding display transparency according to click times of a key; and/or
obtaining a corresponding display shape according to click times of a key; and/or
obtaining a corresponding display size according to click times of a key.

4. The method according to claim 1, wherein the obtaining a display manner corresponding to the counted click times of each key comprises:
obtaining a corresponding display color according to an order of magnitude of click times of a key; and/or
obtaining corresponding display brightness according to an order of magnitude of click times of a key; and/or
obtaining corresponding display transparency according to an order of magnitude of click times of a key; and/or
obtaining a corresponding display shape according to an order of magnitude of click times of a key; and/or
obtaining a corresponding display size according to an order of magnitude of click times of a key.

5. The method according to any one of claims 1 to 4, further comprising:
setting the correspondence between click times of keys and display manners.

6. A wireless handheld device, comprising:
a touchscreen, configured to receive a click operation;
a counting unit, configured to count click times of each key of a virtual keyboard on the touchscreen;
an obtaining unit, configured to obtain a display manner corresponding to the click times of each key counted by the counting unit based on correspondence between click times of keys and display manners; and
a display unit, configured to display each key according to the display manner obtained by the obtaining unit and corresponding to the click times of each key.

7. The wireless handheld device according to claim 6, wherein the obtaining unit comprises at least one of the following units:
a first obtaining subunit, configured to obtain a corresponding display color according to a quantity interval to which click times of a key belong;
a second obtaining subunit, configured to obtain corresponding display brightness according to a quantity interval to which click times of a key belong;
a third obtaining subunit, configured to obtain corresponding display transparency according to a quantity interval to which click times of a key belong;
a fourth obtaining subunit, configured to obtain a corresponding display shape according to a quantity interval to which click times of a key belong; and
a fifth obtaining subunit, configured to obtain a corresponding display size according to a quantity interval to which click times of a key belong.

8. The wireless handheld device according to claim 6, wherein the obtaining unit comprises at least one of the following units:
a sixth obtaining subunit, configured to obtain a corresponding display color according to click times of a key;
a seventh obtaining subunit, configured to obtain corresponding display brightness according to click times of a key;
an eighth obtaining subunit, configured to obtain corresponding display transparency according to click times of a key;
a ninth obtaining subunit, configured to obtain a corresponding display shape according to click times of a key; and
a tenth obtaining subunit, configured to obtain a corresponding display size according to click times of a key.

9. The wireless handheld device according to claim 6, wherein the obtaining unit comprises at least one of the following units:
an eleventh obtaining subunit, configured to obtain a corresponding display color according to an order of magnitude of click times of a key;
a twelfth obtaining subunit, configured to obtain corresponding display brightness according to an order of magnitude of click times of a key;
a thirteenth obtaining subunit, configured to obtain corresponding display transparency according to an order of magnitude of click times of a key;
a fourteenth obtaining subunit, configured to obtain a corresponding display shape according to an order of magnitude of click times of a key; and
a fifteenth obtaining subunit 55, configured to obtain a corresponding display size according to an order of magnitude of click times of a key.

10. The wireless handheld device according to any one of claims 6 to 9, further comprising:
a setting unit, configured to set the correspondence between click times of keys and display manners.
